# EUROPÄISCHE PATENTSCHRIFT

(11) **EP 2 617 691 B1**
(45) Veröffentlichungstag und Bekanntmachung des Hinweises auf die Patenterteilung: **13.06.2018**
(21) Anmeldenummer: 12002342.9
(22) Anmeldetag: 30.03.2012
(51) Int. Cl.: C04B 7/13, C04B 7/153, C04B 7/24, C04B 7/345, C04B 28/08

(54) **Ternesit als Anreger für latent-hydraulische und puzzolanische Materialien**
Ternesite as an activator for latent-hydraulic and puzzolanic materials
Ternesite comme activateur de matériaux puzzolaniques et à latence hydraulique

(30) Priorität: 18.08.2011 EP 11006757; 26.10.2011 EP 11008570; 05.03.2012 EP 12001488; 26.03.2012 EP 12002111
(43) Veröffentlichungstag der Anmeldung: 24.07.2013
(73) Patentinhaber: HeidelbergCement AG, 69120 Heidelberg (DE)
(72) Erfinder: Bullerjahn, Frank, 69181 Leimen (DE); Batog, Barbara, 34-480 Jablonka (PL); Irbe, Linda, 82216 Maisach (DE); Ben Haha, Mohsen, 69117 Heidelberg (DE); Schmitt, Dirk, 69181 Leimen (DE)
(74) Vertreter: Zellentin & Partner mbB Patentanwälte

(56) Entgegenhaltungen:
- EP-A1- 0 959 053
- EP-A1- 1 171 398
- WO-A2-2005/097700
- AT-B- 393 381
- DE-C1- 3 701 717
- SHERMAN N ET AL: "Long-term behaviour of hydraulic binders based on calcium sulfoaluminate and calcium sulfosilicate", CEMENT AND CONCRETE RESEARCH, PERGAMON PRESS, ELMSFORD, NY, US, Bd. 25, Nr. 1, 1. Januar 1995 (1995-01-01) , Seiten 113-126, XP002665884, ISSN: 0008-8846
- BERETKA J ET AL: "Influence of C4A3S~ content and W/S ratio on the performance of calcium sulfoaluminate-based cements", CEMENT AND CONCRETE RESEARCH, PERGAMON PRESS, ELMSFORD, NY, US, Bd. 26, Nr. 11, 1. November 1996 (1996-11-01), Seiten 1673-1681, XP002320780, ISSN: 0008-8846, DOI: 10.1016/S0008-8846(96)00164-0
- BELZ G ET AL: "USE OF FLY ASH, BLAST FURNACE SLAG, AND CHEMICAL GYSUM FOR THE SYNTHESIS OF CALCIUM SULFOALUMINATE-BASED CEMENTS", FLY ASH, SILICA FUME, SLAG AND NATURAL POZZOLANS IN CONCRETE.PROCEEDINGS INTERNATIONAL CONFERENCE, XX, XX, Bd. 1, Nr. SP-153, 1. Januar 1995 (1995-01-01), Seiten 513-530, XP001011491,
- J. STARK: "Zement und Kalk: Der Baustoff als Werkstoff", 1. Januar 2000 (2000-01-01), Birkhäuser, Basel, XP002679558, ISBN: 3-7643-6216-2 * Seite 61 *
- E. IRRAN ET AL: "Ternesit, Ca5(SiO4)2SO4, ein neues Mineral vom Ettringer Bellerberg, Eifel, Deutschland", MINERALOGY AND PETROLOGY, Bd. 60, Nr. 1-2, 1. Januar 1997 (1997-01-01), Seiten 121-132, XP055030231, ISSN: 0930-0708, DOI: 10.1007/BF01163138

## Beschreibung

Die vorliegende Erfindung betrifft hydraulische Bindemittel auf Basis von latent-hydraulischen und/oder puzzolanischen Materialien, wie Hüttensand und/oder getemperte Tone / Schiefer, Flugaschen, und ein Verfahren zur Anregung von latent-hydraulischen und/oder puzzolanischen Materialien.

Hüttensand ist glasig erstarrte, granulierte Hochofenschlacke. Hochofenschlacke entsteht bei der Roheisenerzeugung im Hochofen dadurch, dass sich die Al₂O₃- und SiO₂- reichen Bestandteile der nichtmetallischen Erzbegleitphasen und der Koksasche beim Schmelzprozess mit dem Kalkzuschlag zu Kalk-Aluminat-Silikaten verbinden. Sie übernimmt damit wichtige metallurgische Aufgaben. Sie befreit das Roheisen vom Schwefel des Kokses, den Ofen von Alkalien und schützt das Roheisen vor der Reoxidation. Die Hochofenschlacke schwimmt auf Grund ihrer geringeren Dichte auf dem Eisen. Durch Optimierung ihrer Zusammensetzung wird der Schmelzpunkt minimiert und durch ihre Dünnflüssigkeit die leichte Trennbarkeit vom flüssigen Eisen sichergestellt. Wird die geschmolzene Hochofenschlacke an der Luft langsam abgekühlt, kristallisiert sie fast vollständig und es entsteht ein stückiges, hartes, hydraulisch inaktives Material. Dieses, als Hochofenstückschlacke bezeichnete Material, verhält sich in fein gemahlenem Zustand gegenüber Wasser praktisch inert. Es wird auf Grund dieser Eigenschaft und seiner Härte z.B. im Straßenbau eingesetzt.

Seit 1862 ist bekannt, dass durch Abschrecken der geschmolzenen Hochofenschlacke mit Wasser ein sandartiges, glasiges Granulat hergestellt werden kann, das latent-hydraulische Eigenschaften besitzt. Bei dieser "Granulierung" wird die Schmelze von ca. 1500°C mit einem bis zu 10-fachen Wasserüberschuss sehr rasch unter die sogenannte Transformationstemperatur von 840°C abgekühlt und zerteilt. Für solche "granulierte" Hochofenschlacken wurde von Beginn des 20. Jahrhunderts an zunehmend der Begriff "Hüttensand" verwendet und 1954 vom Verein Deutscher Eisenhüttenleute als Bezeichnung festgelegt.

Hydraulische Bindemittel können in fein gemahlenem Zustand nach dem Anmachen mit Wasser sowohl an der Luft als auch unter Wasser erhärten. Als hydraulisch werden Materialien bezeichnet, die diese Erhärtung in reinem Zustand zeigen, z.B. Portlandzementklinker. Als latent-hydraulisch werden Materialien dann bezeichnet, wenn sie grundsätzlich über die Fähigkeit verfügen hydraulisch zu erhärten, dazu aber einen oder mehrere Anreger benötigen, wie z.B. Hüttensand und künstliche Gläser (mit einer dem Hüttensand vergleichbaren chem. Zusammensetzung). Die Charakterisierung "latent-hydraulisch" wird verwendet, um die besonderen Eigenschaften der Hüttensande und mit ihnen vergleichbarer Bindemittel zu beschreiben. Sie sagt aus, dass ein bestimmtes Bindemittel dem Portlandzement sowohl in seiner Fähigkeit, hydraulisch zu erhärten als auch in seinem Chemismus nahe steht. Ein latent-hydraulisches Bindemittel enthält demnach sowohl reaktives SiO₂ als auch reaktives CaO in ausreichend hoher Menge, um mit Hilfe eines äußeren Anstoßes (Anreger) mit Wasser unter Bildung von Calciumsilicathydraten hydraulisch zu erhärten.

Im Unterschied dazu sind Puzzolane oder puzzolanische Materialien natürliche oder industriell hergestellte Stoffe, wie z.B. getemperte Tone und Schiefer, Trass, Ziegelmehl, kalkarme (z.B. nach DIN EN 450-1) [V] aber zum Teil auch kalkreiche (>10 Gew.-% CaO, z.B. DIN EN 197-1) [W] Flugaschen, die reaktives SiO₂ alleine oder auch zusammen mit Al₂O₃ und/oder Fe₂O₃ enthalten, aber nicht selbstständig mit Wasser erhärten können. Grundsätzlich, mit Ausnahmen, wie zum Beispiel W Flugaschen, enthalten Puzzolane entweder kein oder nur sehr wenig CaO. Sie benötigen deshalb, im Gegensatz zu den latent-hydraulischen Bindemitteln, für ein hydraulisches, auf der Bildung von Calciumsilicathydraten beruhendes Erhärten, zwingend einen Zusatz von CaO oder Ca(OH)₂.

Kalkreiche Flugaschen, Trass, Ziegelmehl und getemperte Tone und Schiefer können je nach chemischer und mineralogischer Zusammensetzung, vor allem hinsichtlicht ihrer Gehalte und der Verteilung des reaktionsfähigen CaO, SiO₂ und Al₂O₃ (reaktive Phase, Glasgehalt, etc.), latent-hydraulische oder puzzolanische Eigenschaften aufweisen.

Flugasche wird durch die elektrostatische oder mechanische Abscheidung staubartiger Partikel aus den Rauchgasen von Verbrennungskraftwerken gewonnen. Typischerweise liegen Flugaschepartikel überwiegend in kugeligglasiger Form vor.

Nach Angaben des FEhS Institutes für Baustoff - Forschung e.V. aus dem Jahr 2006 waren 142 in den Jahren 1995 bis 2006 untersuchte europäische Hüttensande im Durchschnitt wie in Tabelle 1 dargestellt zusammengesetzt (glühverlustfrei gerechnete Gehalte der Hauptkomponenten in %):

**Tabelle 1:**

| | Mittelwert | Min. | Max. |
|---|---|---|---|
| CaO | 39,4 | 30,7 | 45,6 |
| MgO | 8,8 | 3,5 | 17,3 |
| SiO₂ | 36,8 | 30,7 | 44,0 |
| Al₂O₃ | 11,2 | 5,4 | 16,4 |
| FeO | 0,6 | 0,1 | 2,2 |

Der mittlere Glasgehalt dieser Hüttensande lag bei 95%.

Erhebliche Forschungsaktivitäten haben im Laufe der Zeit dazu geführt, dass bestimmte Stoffgruppen als Anreger der latent-hydraulischen Eigenschaften der Hüttensande identifiziert und nutzbar gemacht werden konnten. Grundsätzlich können im Hinblick auf die hydraulische Aktivität von Hüttensanden derzeit folgende Aussagen als gesichert gelten:
- Eine Erhöhung der Basizität CaO/SiO₂ (C/S - Verhältnis) führt zu einer Steigerung der Reaktivität.
- Das hydraulische Erhärtungsvermögen steigt mit zunehmendem Gehalt an CaO und MgO
- Höhere Gehalte an Aluminiumoxid erhöhen die Anfangsfestigkeit unter folgenden Bedingungen:
   ∘ Diese Aussage gilt für den glasigen Anteil des Hüttensandes;
   ∘ Die Bindemittel enthalten Sufatträger zur Bindung des Aluminiums durch die Bildung von Ettringit.

Im Wesentlichen spricht man heute von zwei grundsätzlichen Anregungsformen: der alkalischen- und der sulfatischen Anregung. Die anregende Wirkung des basischen Kalkhydrates auf latent-hydraulische und/oder puzzolanische Materialien, hier anhand des Beispiels von Hüttensand verdeutlicht, wurde früh erkannt und bereits 1865 zur Herstellung von Schlackensteinen kommerziell genutzt. 1879 wurden erstmals hüttensandhaltige Portlandzemente hergestellt und so die anregende Wirkung des bei der Hydratation der Calciumsilicate entstehenden Kalkhydrates zusammen mit den im Portlandzement zusätzlich vorhandenen Alkalihydroxiden genutzt. Das vom Portlandzement freigesetzte Kalkhydrat wirkt hier als Aktivierer der latent-hydraulischen Eigenschaften des Hüttensandes und hat, im Gegensatz zu seiner Rolle bei den Puzzolanen, nicht ausschließlich die Aufgabe, durch Reaktion mit reaktivem SiO₂ neue, festigkeitsrelevante Mengen von Calciumsilicathydraten zu bilden.

Die latent-hydraulischen Eigenschaften der Hüttensande haben dazu geführt, dass sie über die Jahrzehnte hinweg in stetig zunehmendem Maße als Bestandteil von Zementen eingesetzt worden sind. Nach EN 197-1 kann in den Portlandhüttenzementen CEM II/A-S und CEM II/B-S Hüttensand zwischen 6 und 35 %, in den Hochofenzementen CEM III/A und CEM III/B zwischen 36 und 80 % enthalten sein und entsprechende Anteile Klinker ersetzen. Da der CaO - Gehalt der Hüttensande im Mittel bei ca. 40 % liegt und damit nur ungefähr 2/3 des mittleren CaO - Gehaltes von Portlandzement CEM I beträgt, ist die Produktion von hüttensandhaltigen Zementen grundsätzlich mit einer Minderung der CO₂ Emissionen verbunden, die in einem direkten Verhältnis zu ihrem Hüttensandgehalt steht.

Auch im Hinblick auf seine Dauerhaftigkeit und Widerstandsfähigkeit gegen aggressive, z.B. gegen sulfathaltige- oder schwach saure, Wässer ist ein steigender Anteil von latent-hydraulischen und/oder puzzolanischen Materialien im Portlandzement von Vorteil.

Ein wesentliches, limitierendes Kriterium für die Einsatzmenge von latent-hydraulischen und/oder puzzolanischen Materialien im Zement ist allerdings die Tatsache, dass ein zunehmender Ersatz von fein gemahlenem Portlandzementklinker durch zum Beispiel Hüttensand vergleichbarer Feinheit in den ersten Tagen nach dem Anmachen mit Wasser zu systematisch abnehmenden Druckfestigkeiten im Mörtel und Beton führt. Während man dieses Phänomen in der Vergangenheit als "geringere Reaktivität" interpretiert hat, sieht man heute den Reaktivitätsbegriff zunehmend differenzierter. Es hat sich gezeigt, dass in ihrer Fähigkeit mit Wasser zu reagieren als "wenig reaktiv" eingestufte, d.h. korrosionsbeständigere Hüttensande, in Mischungen mit Portlandzementen regelmäßig zu höheren Frühfestigkeiten führen als gleiche Mischungen mit "reaktiven" Hüttensanden. In diesem Sinne werden zunehmend Versuche unternommen, durch geeignete Additive die Bildung von ungünstigen, zu niedrigeren Druckfestigkeiten führenden Reaktionsprodukten bei den "reaktiven" Hüttensanden zu verhindern.

Im Gegensatz zur alkalischen Anregung, die hauptsächlich bei den hüttensandhaltigen Portlandzementen wirksam ist, beruht die von H. Kühl entdeckte, sulfatische Anregung im ersten Schritt auf der Bildung von Ettringit, d.h. einer direkten chemischen Reaktion zwischen dem Al₂O₃- Gehalt der Hüttensande, geringen Mengen zugesetztem Kalkhydrat und 15 bis 20 % zugesetztem Calciumsulfat.

Auch auf dem Gebiet der sogenannten Sulfat-Hüttenzemente gibt es in neuerer Zeit wieder erhebliche Aktivitäten verschiedener Baustoffhersteller, mit dem Ziel, die bekannten Nachteile dieses Bindemittelsystems zu überwinden. Die abnehmenden Frühfestigkeiten durch fortschreitende Verringerung des Al₂O₃ Gehaltes der Hüttensande hatten in den 70er Jahren des 20. Jahrhunderts letztlich zur Rücknahme der seit 1937 bestehenden Norm DIN 4210 geführt.

Es ist bisher neben der alkalischen und der sulfatischen Anregung des Hüttensandes, abgesehen von der grundsätzlichen Möglichkeit des Erwärmens, nur ein weiterer Anregungsmechanismus bekannt.

WO2005/097700A2 zeigt ein hydraulisches Bindemittel enthaltend Schlacken, Aluminiumsilikate und Kalziumsulfat. Schlacke, insbesondere Hochofenschlacke, liegt in Mengen von unter 50 Gew.% vor. Ausserdem liegen von Hochofenschlacke verschiedene Aluminiumsilikate vor, wie z.B. Flugasche und natürliche Aluminiumsilikate, wie z.B. Basalt oder Andesit, in Mengen von 5 Gew. % bis 75 Gew.% jeweils bezogen auf die gesamte Mischung, mit der Massgabe, dass die Summe von Schlacke und Aluminiumsilikaten zwischen 82 und 95,9 Gew. % beträgt, und das einer der Aktivatoren CaSO4 in Mengen zwischen 4 und 15 Gew. % enthält. Zusätzlich sind Alkaliaktivatoren, insbesondere Alkalihydroxide und/oder -karbonate von Na und/oder K in Mengen von 0,1 bis 3 Gew.% eingesetzt. Die nicht vorveröffentlichte PCT/EP 2011/005314 beschreibt, dass das schwach alkalische und nahezu wasserunlösliche Magnesiumhydroxidcarbonat geeignet ist, als Zusatz zu Hüttensand zementüblicher Mahlfeinheit, nach dem Anmachen mit Wasser zu einer Paste oder einem Mörtel, innerhalb kurzer Zeit mit dem Hüttensand praktisch vollständig zu reagieren und dabei einen Erhärtungsvorgang zu bewirken.

Aufgabe der Erfindung war es, einen weiteren Anregungsmechanismus zu schaffen, der im Stande ist, latent-hydraulische und/oder puzzolanische Materialien, wie fein gemahlene Hüttensande, industrielle und natürliche (Flug)Aschen, künstliche Gläser und getemperte Tone / Schiefer, auch ohne Anwendung der bekannten, hoch alkalischen oder sulfatischen Anregung (durch Anhydrit, Basanit und/oder Gips), nach dem Anmachen mit Wasser innerhalb weniger Stunden zu einer festigkeitsbildenden Reaktion zu veranlassen.

Überraschend wurde nun gefunden, dass Ternesit, eine bisher überwiegend als inert angesehene Phase der Zusammensetzung C₅S₂$, in der Lage ist, die hydraulische Reaktion von latent-hydraulischen und/oder puzzolanischen Materialien anzuregen.

Die Erfindung löst daher die obige Aufgabe durch hydraulische Bindemittel auf Basis von latent-hydraulischem und/oder puzzolanischem Material und Ternesit sowie durch ein Verfahren zur Anregung von latent-hydraulischen und/oder puzzolanischen Materialien durch Zusatz von Ternesit / Ternesit enthaltenden Klinkern/Zementen.

Es ist weiterhin von Vorteil, dass Ternesit anders als bisherige Sulfatquellen im Verlauf der Hydratation auch zu späten Zeiten noch Sulfat bereitstellt. Damit kann zu späteren Zeiten freigesetztes, reaktives Aluminium, z.B. in der Form von amorphem Aluminiumhydroxid(-Gel) und/oder Al(OH)₄⁻, mit diesem Sulfat abbinden. Damit bewährt sich Ternesit besonders auch in Portlandhüttenzement, Hochofenzement und anderen "Supplementary Cementitious Materials" (SCM) enthaltenden Kompositzementen.

Des Weiteren führt die fortlaufende Bildung/Freisetzung von Al(OH)₄⁻bzw. amorphem Aluminiumhydroxid(-Gel) zur fortschreitenden Reaktion der C₅S₂$-Phase. Einerseits wird dadurch zusätzliches Sulfat zur Verfügung gestellt, was wiederum AFₜ stabilisiert und eine mögliche Transformation zu AFₘ vermeidet / verringert. Andererseits wird eine reaktive Form von C₂S freigesetzt, C₅S₂$ oder (C₂S)₂ • C$ ↔ 2 C₂S + 1 C$, die mit Wasser aber auch mit dem verfügbaren Al(OH)₃ reagieren und C₂AS • 8 H₂O (Strätlingit) sowie C-(A)-S-H bilden kann. Die Stabilisierung von AFₜ und der Verbrauch von Al(OH)₃ sowie die Verringerung der Porosität durch die Bildung von C₂AS • 8 H₂O und C-(A)-S-H des erfindungsgemäßen Bindemittels führt zu einer deutlichen Verbesserung der Dauerhaftigkeit zum Beispiel, aber nicht ausschließlich, durch die Verringerung der Gesamtporosität und / oder des verbundenen Porenraums und die Beständigkeit gegenüber einem möglichen Sulfatangriff.

Es werden folgende in der Zementindustrie üblichen Abkürzungen verwendet: H - H₂O, C - CaO, A - Al₂O₃, F - Fe₂O₃, M - MgO, S - SiO₂ und $ - SO₃. Um die weitere Beschreibung zu vereinfachen werden zumeist Verbindungen in ihrer reinen Form angegeben, ohne explizite Angabe von Mischreihen / Substitution durch Fremdionen usw. wie sie in technischen und industriellen Materialien üblich sind. Wie jeder Fachmann versteht, kann die Zusammensetzung der in dieser Erfindung namentlich genannten Phasen, in Abhängigkeit vom Chemismus des Rohmehls und der Art der Herstellung, durch die Substitution mit diversen Fremdionen variieren, wobei solche Verbindungen ebenfalls in den Schutzbereich der vorliegenden Erfindung fallen und von der Angabe der reinen Phasen/Verbindungen umfasst sein sollen.

Ternesit (C₅S₂$, auch als Sulfospurrit, Sulfatspurrit oder Kalziumsulfosilikat bezeichnet) ist eine Phase, die sich bei der Sinterung von Rohstoffgemischen, welche Quellen für CaO, SiO₂ und SO₃ enthalten, bei Temperaturen von bis zu 900°C bis 1200 °C und unter Umständen bis 1300°C bildet. Typischerweise tritt Ternesit daher bei der Herstellung von Portlandzementklinker nicht auf, da dieser bei deutlich höherer Temperatur gesintert wird. Beobachtet wurde Ternesit dagegen vielfach als (meist unerwünschtes, weil unreaktives) Nebenprodukt bei der Herstellung von Calciumsulfoaluminatzementen. Untersuchungen an Calciumsulfoaluminatzementen ergaben immer wieder, dass Ternesit nicht oder wenn überhaupt sehr langsam hydraulisch reagiert, siehe beispielsweise Belz et al., "Use of Fly Ash, Blast Furnace Slag, and Chemical Gypsum for the synthesis of calcium sulfoaluminate-based cements", Proc. 5th Int. Conf. Fly Ash, Silica Fume, Slag and natural Pozzolanes in Concrete, Milwaukee, Ed.: V.M. Malhotra, ACI SP-153, Bd. 1, S. 513-530 (1995), Beretka et al., "Energy-Saving Cements obtained from Chemical Gypsum and other industrial Wastes", Waste Manangement, Bd. 1, S. 231-235 (1996), Shermann et al, "Long-Term Behaviour of Hydraulic Binders based on Claciumsulfoaluminate and Calciumsulfosilicate", Cement and Concrete Research, Bd. 1, S. 113-126 (1995), Beretka et al., "Synthesis and Properties of low energy cwements based on C4A3$", Proc. 9th Int. Congr. Chem. Cement, New Delhi, Bd. 3, S. 195-200 (1992), Beretka et al., "Utilisaton of industrial wastes and by-prodcts for the synthesis of special cements", Resources, Conserv. and Recycling, Bd. 9, S. 179-190 (1993).

Aus der EP 1 171 398 sind Spezialklinker bekannt, die hohe Konzentrationen an Kristall X = {(C, K, N, M)₄(A, F, Mn, P, T, S)₃(Cl, $)} und Kristall Y = {(C₂S)₃(C$)₃Ca(f, cl)₂} oder C₉S₃$₃Ca(f, Cl)₂ und/oder Kristall Z = {C₅S₂$} aufweisen. Diese Klinker werden mit hydraulischem Zement oder Zement vom Typ Portland gemischt, um fertige Bindemittel zu erhalten.

Eine Brauchbarkeit von Ternesit als Anreger für latent-hydraulische und/oder puzzolanische Materialien, wie zum Beispiel Hüttensand oder Metakaolin, bzw. eine Festigkeitsbildung von Bindemitteln aus Ternesit und latent-hydraulischen und/oder puzzolanischen Materialien lässt sich diesen Dokumenten nicht entnehmen. Es war somit sehr überraschend, dass Ternesit in Kombination mit latent-hydraulischen und/oder puzzolanischen Materialien eine ausreichende bis sogar hohe Frühfestigkeit bereitstellt.

C₅S₂$ kann durch Sinterung von Rohstoffen, welche ausreichende Mengen CaO, SiO₂ und SO₃ bereitstellen, hergestellt werden. Dabei eignen sich einerseits reine bzw. im Wesentlichen reine Rohstoffe wie Calciumcarbonat oder - oxid, Quarzmehl oder Microsilica, und Calciumsulfat. Andererseits kann eine Vielzahl natürliche aber auch industrielle Materialien, wie zum Beispiel, aber nicht ausschließlich, Kalkstein, Bauxit, Ton / Tonstein, kalzinierte Tone (z.B. Metakaolin), Basalte, Periodite, Dunite, Ignimbrite, Karbonatite, Aschen / Schlacken / Hüttensande hoher und geringer Qualität (Mineralogie / Glasgehalt, Reaktivität, etc.), diverse Haldenmaterialien, Rot- und Braunschlämme, natürliche Sulfatträger, Entschwefelungsschlämme, Phosphogips, Rauchgasgips, Titanogips, Fluorogips, etc., in geeigneter Kombination als Rohmaterial verwendet werden. Es fallen ebenfalls namentlich nicht genannte Stoffe / Stoffgruppen in den Schutzbereich, welche die chemischen Mindestanforderungen als potentielle Rohstoffe erfüllen. Die Rohstoffe können, müssen aber nicht, vorbehandelt werden.

Der Einsatz von weniger reinen Rohstoffen führt zur vermehrten Bildung von Al₂O₃- und Fe₂O₃-reichen Klinkerphasen, wie zum Beispiel C₄A₃$ und C₄AF. Vorzugsweise kann Eisen aber ebenfalls in die Phase C₄A₃$ eingebaut werden. Der Fremdioneneinbau kann zu einer erhöhten Bildungsgeschwindigkeit der Phase in der heißen Zone führen, was wiederum potentiell die benötigte Verweildauer verringert und / oder zu ihrer quantitativen Zunahme führen kann. Die Bezeichnung Al₂O₃(Fe₂O₃) bedeutet ebenso wie in der Angabe C₄(AₓF₍₁₋ₓ₎)₃$ für die Klinkerphase, dass Aluminium teilweise durch Eisen ersetzbar ist, d.h. x ist eine Zahl von 0,1 bis 1,0, vorzugsweise von 0,8 bis 0,95. Typischerweise liegt hauptsächlich Aluminium mit geringen Beimengungen von Eisen vor, es liegt aber im Rahmen der Erfindung erhebliche Mengen Eisen bis hin zu einem überwiegenden Gehalt an Eisen einzusetzen.

Ein Nachweis für den Einbau von Eisen ist die quantitative Abnahme eisenreicher Phasen (z.B. Fe₃O₄, C₂F und C₄AF), die Zunahme der Phase C₄A₃$ bzw. C₄(AₓFe₍₁₋ₓ₎)₃$, sowie die Zunahme der Peakintensitäten und des Gitterparameters c (Å) [Kristallsystem: Orthorhombisch] von 9,1610 [PDF-Nummer: 01-085-2210, Tetracalcium hexaaluminate sulfate(VI) - Ca₄ (Al₆O₁₂)(SO₄), ICSD Collection Kode: 080361, Calculated from ICSD using POWD-12++, (1997), Struktur: Calos, N.J., Kennard, C.H.L., Whittaker, A.K., Davis, R.L., J. Solid State Chem., 119, 1, (1995)] über 9,1784 [PDF-Nummer: 00-051-0162, Calcium Aluminum Iron Oxide Sulfate - Ca₄((Al_{0.95}Fe_{0.05}))₆O₁₂(SO₄), ICSD Collection Kode: -, Primärer Verweis: Schmidt, R., Pöllmann, H., Martin-Luther-Univ., Halle, Germany., ICDD Grant-in-Aid, (1999)] bis zu Werten von über 9,2000. Die Prüfung auf eine etwaige Mischkristallbildung kann ebenfalls mittels der Bestimmung der Besetzungsfaktoren bei einer Rietveld-Anpassung durch Unter- oder Gemischtbesetzungen einzelner Atomlagen ermittelt werden. Ein weiterer rein qualitativer Indikator ist die zum Teil deutliche Farbveränderung der Klinker. So ändert sich die Farbe der Klinker von einem Kastanien- / Ockerbraun über Grünbraun bis hin zu einem hellen Grauton.

Ternesit kommt auch als Mineral vor, jedoch sind keine Lagerstätten bekannt, aus denen es in ausreichender Menge bzw. Reinheit gewonnen werden kann, so dass der Einsatz von "natürlichem" Ternesit zwar möglich, in der Praxis aber unwirtschaftlich ist. Eine Herstellung durch Sinterung geeigneter Rohstoffe ist erfindungsgemäß vorzuziehen.

Die Rohstoffe für die Herstellung des Ternesit oder Ternesit-Klinkers werden in an sich bekannter Weise auf übliche Feinheiten gemahlen. Feinheiten von 2000 bis 10000 cm²/g, vorzugsweise im Bereich von 3000 bis 6000 cm²/g und besonders bevorzugt von 4000 bis 5000 cm²/g sind besonders gut geeignet. Die Mahlfeinheit richtet sich in erster Linie nach der Art und Zusammensetzung des eingesetzten Rohstoffes, dem Brennprozess (Temperatur, Verweildauer in der Sinterzone, etc.) sowie den angestrebten Eigenschaften des Bindemittels und den zur Verfügung stehenden technischen Möglichkeiten.

Der C₅S₂$ enthaltende Klinker, besonders wenn dieser wenig andere Phasen aufweist, lässt sich mit sehr geringem Energieeinsatz mahlen, so dass dieser, wenn zum Beispiel eine höhere Reaktivität (schnellere Umsetzung / Verbrauch) von C₅S₂$ erwünscht ist, auf höhere Feinheiten des C₅S₂$-enthaltenden Klinkers durch separates Mahlen oder Vormahlen eingestellt werden kann. Das ermahlene Produkt kann, wenn für eine spezielle Anwendung benötigt, auf eine Partikelgrößenverteilung mit d₅₀ kleiner 20 µm und d₉₀ kleiner 100 µm, beziehungsweise einem d₅₀ kleiner 5 µm und einem d₉₀ kleiner 20 µm aber auch einem d₅₀ kleiner 0,1 µm und einem d₉₀ kleiner 2 µm aufweisen.

Soll die Herstellung möglichst reines C₅S₂$ ergeben, werden Rohstoffe gewählt, welche neben Quellen für CaO, SiO₂ und SO₃ keine oder nur wenig weitere Bestandteile enthalten. Die Umsetzung von Calciumcarbonat mit Quarzmehl und Calciumsulfat im Temperaturbereich von typischerweise 900 bis 1300°C, vorzugsweise von 1000 bis 1200°C und noch stärker bevorzugt von 1050 bis 1150°C ergibt C₅S₂$ mit einer Reinheit von > 99 %.

Es ist jedoch bevorzugt, wenn zur Herstellung von C₅S₂$ ein möglichst hoher Anteil kostengünstiger und umweltverträglicher Rohstoffe zum Einsatz kommt. Umweltverträglich meint hierbei einen möglichst geringen Energieeinsatz und/oder die Schonung natürlicher Rohstoffe bzw. hochwertiger Abfall- und Nebenprodukte. In diesem Fall wird kein reines C₅S₂$ erhalten, sondern ein Ternesit-Klinker, der neben C₅S₂$ weitere Komponenten enthält. Art und Anteile der Komponenten lassen sich durch die Zusammensetzung des Rohmehls, die Sintertemperatur und die Aufheizrate steuern, wobei in jedem Fall ein Gehalt an C₅S₂$ von wenigstens 10 Gew.-%, vorzugsweise wenigstens 30 Gew.-% und besonders bevorzugt wenigstens 40 Gew.-% angestrebt wird. Es wurde gefunden, dass C₅S₂$ auch bei höheren Sintertemperaturen gebildet wird bzw. stabilisert ist, wenn die Rohmehlmischung Mineralisatoren wie zum Beispiel Phosphat, Fluorid, Bor, Nitrat, Chlorid, Natrium und Kalium enthält und/oder eine hohe Aufheizrate gewählt wird. Schließlich kann ein erhöhter Gehalt an C₅S₂$ auch durch eine an die Sinterung anschließende Temperung erreicht werden, während der der Gehalt von C₅S₂$ auf Kosten anderer Phasen gebildet wird, wie in EP11006757.6 beschrieben, auf deren Inhalt hierfür Bezug genommen wird.

Unter Mineralisatoren sind Stoffe zu verstehen, welche als Flussmittel wirken und/oder die Temperatur senken die zur Bildung einer Schmelze notwendig ist und /oder solche, die die Bildung der Klinkerverbindung fördern, wie zum Beispiel durch Mischkristallbildung und/oder Phasenstabilisierung.

Der Temperaturbereich für die Sinterung des Rohmeahls von 900°C bis 1300°C, vorzugsweise von 1000°C bis 1200°C und noch stärker bevorzugt von 1050 bis 1150°C sollte für einen Zeitraum von 10 min bis 180 min, vorzugsweise von 25 min bis 120 min und noch stärker bevorzugt von 30 min bis 60 min durchlaufen werden. Der Klinker kann zur weiteren Bildung gewünschter Phasen während der Abkühlung den Bereich von 900°C bis 750°C für einen Zeitraum von 5 min bis 120 min, vorzugsweise von 10 min bis 60 min durchlaufen. Abschließend oder aber auch ohne eine verzögerte Abkühlung durch den Bereich von 900° bis 750°C, wird der Klinker in an sich bekannter Weise rapide abgekühlt, so dass weitere Phasenumwandlungen verhindert werden.

Der C₅S₂$ als Hauptkomponente enthaltende Ternesit-Klinker bzw. ein daraus durch Mahlen ohne Zusätze erhaltener Zement enthält erfindungsgemäß die folgenden Komponenten in den angegebenen Anteilen:
- C₅S₂$ 10 bis 100 Gew.-%, bevorzugt 30 bis 95 Gew.-% und noch stärker bevorzugt 40 bis 90 Gew.-%
- (α, β) C₂S 0 bis 90 Gew.-%, bevorzugt 5 bis 70 Gew.-% und noch stärker bevorzugt 10 bis 60 Gew.-%
- C₄(AₓF₍₁₋ₓ₎)₃$ 0 bis 30 Gew.-%, bevorzugt 3 bis 25 Gew.-% und noch stärker bevorzugt 5 bis 20 Gew.-%
- C₂(A_{y}F_{(1-y)}) 0 bis 30 Gew.-%, bevorzugt 5 bis 20 Gew.-% und noch stärker bevorzugt 8 bis 15 Gew.-%
- Reaktive Aluminate 0 bis 20 Gew.-%, bevorzugt 1 bis 15 Gew.-% und noch stärker bevorzugt 3 bis 10 Gew.-%
- Periklas (M) 0 bis 25 Gew.-%, bevorzugt 1 bis 15 Gew.-% und noch stärker bevorzugt 2 bis 10 Gew.-%
- Nebenphasen 0 bis 30 Gew.-%, bevorzugt 3 bis 20 Gew.-% und noch stärker bevorzugt 5 bis 10 Gew.-%
bezogen auf die gesamte Menge an Klinker/Zement, wobei sich die Anteile der Phasen zu 100% addieren.

Die Angabe (α, β) C₂S bedeutet, dass es sich um Polymorphe von C₂S und deren Gemische handeln kann, wobei die reaktiven α Polymorphe (z.B. α, α'_{L}, α'_{H}) bevorzugt werden. Vorzugsweise sind mindestens 5 Gew.-% a Polymorphe von C₂S enthalten, da diese vorteilhaft zu einer hohen Frühfestigkeit beitragen. Durch die Zugabe von Mineralisatoren zum Rohmehl, kann ein Teil, bis hin zum überwiegenden Teil, des Dicalciumsilikates in Form Mischkristallen beziehungsweise von dotiertem "a" C₂S, wie zum Beispiel in Gegenwart von P₂O₅ als Calcium-Phosphat-Silikat [Ca₂SiO₄ •0.05Ca₃(PO₄)₂], vorliegen. Des weiteren hat sich gezeigt, dass die Zugabe von Mineralisatoren die Bildung einer Schmelzphase begünstigt / hervorruft.

Bei der Phase C₄(AₓF₍₁₋ₓ₎)₃$ liegt x im Bereich von 0,1 bis 1, vorzugsweise von 0,8 bis 0,95. Bei der Phase C₂(A_{y}F_{(1-y)}) liegt y im Bereich von 0,2 bis 0,8 und vorzugsweise im Bereich von 0,4 bis 0,6.

Unter reaktiven Aluminaten sind zum Beispiel, aber nicht ausschließlich, C₃A, CA und C₁₂A₇ zu verstehen.

Als Nebenphasen können zum Beispiel, aber nicht ausschließlich, Alkali/Erdalkali-Sulfate, Quarze, Spinelle, Olivine, Pyroxene, Vertreter der Melilith- und Merwinit-Gruppe, Freikalk, Spurrit, Quarz und/oder ein röntgenamorpher Phasenbestand / eine Glasphase, in einem Anteil von 0 Gew.-% bis 30 Gew.-%, vorzugsweise von 2 Gew.-% bis 20 Gew.-% und besonders bevorzugt von 5 Gew.-% bis 15 Gew.-% auftreten. Der Freikalkgehalt des Klinkers liegt unter 5 Gew.-%, vorzugsweise unter 2 Gew.-% und besonders bevorzugt unter 1 Gew.-%.

Die Gehalte der Hauptoxide eines C₅S₂$ als Hauptphase enthaltenden, separat hergestellten Klinkers umfassen folgende Bereiche:
- CaO 35 bis 70 Gew.-%, bevorzugt 40 bis 60 Gew.-% und noch stärker bevorzugt 50 bis 55 Gew.-%
- SiO₂ 5 bis 35 Gew.-%, bevorzugt 10 bis 25 Gew.-% und noch stärker bevorzugt 15 bis 23 Gew.-%
- SO₃ 3 bis 30 Gew.-%, bevorzugt 5 bis 26 Gew.-% und noch stärker bevorzugt 8 bis 22 Gew.-%
- ∑(Al₂O₃+Fe₂O₃) 0 bis 40 Gew.-%, bevorzugt 5 bis 30 Gew.-% und noch stärker bevorzugt 8 bis 20 Gew.-%
- MgO 0 bis 25 Gew.-%, bevorzugt 2 bis 15 Gew.-% und noch stärker bevorzugt 5 bis 10 Gew.-%
bezogen auf die gesamte Menge an Klinker/Zement, wobei sich die Anteile der Gehalte zu 100% addieren.

Die separate Herstellung von Ternesit oder einem Klinker bzw. Zement mit Ternesit als mindestens einer der Hauptkomponenten hat den Vorteil, dass Ternesit bzw. dieser Klinker in einem Schritt in einem Temperaturbereich von typischerweise 900 bis 1300°C, vorzugsweise von 1000 bis 1200°C und noch stärker bevorzugt von 1050 bis 1150°C hergestellt werden kann. Bei niedrigen Brenntemperaturen (<1100°C) ergibt sich des weiteren der Vorteil, dass in dem Klinker gezielt erhöhte Magnesium / Periklas-Gehalte (> 2 Gew.-%) eingestellt werden können. Aufgrund der geringen Brenntemperatur kann Periklas in einer reaktiven Form vorliegen und zur Festigkeitsentwicklung / Hydratation beitragen. Aber auch höhere Brenntemperaturen sind je nach Rohstoffmischung brauchbar, sofern Ternesit in hohen Anteilen gebildet wird, bevorzugt sind 10 bis 100 % des Klinkers.

Überraschend hat sich gezeigt, dass Ternesit / Ternesit-Klinker künstliche und natürliche (getemperte) Puzzolane (wie zum Beispiel, aber nicht ausschließlich Ziegelmehl, Flugaschen, Tuff, Trass, Sedimente mit hohem Anteil an löslicher Kieselsäure, getemperte Tone und Schiefer, künstliche Gläser, etc.), latent hydraulische Materialien (wie zum Beispiel, aber nicht ausschließlich, Hüttensand, künstliche Gläser, etc.) und deren Kombinationen mit relativ hohen Gehalten zugesetzt werden können und diese zu einer hydraulischen Reaktion mit einhergehender Verfestigung anregen.

Der Ternesit oder Ternesit-Klinker wird erfindungsgemäß, vor oder nach dem Mahlen, mit mindestens einem latent-hydraulischen und/oder puzzolanischen Material zu einem Bindemittel vermischt.

Im Rahmen der vorliegenden Erfindung meint Klinker ein Sinterprodukt, welches durch Brennen einer Rohstoffmischung bei erhöhter Temperatur erhalten wird und zumindest eine hydraulisch reaktive Phase enthält. Mit Zement wird ein mit oder ohne Zusatz weiterer Komponenten gemahlener Klinker bezeichnet. Bindemittel oder Bindemittelmischung bezeichnet ein Zement und typischerweise aber nicht zwingend weitere, fein gemahlene Komponenten enthaltendes, hydraulisch erhärtendes Gemisch, welches nach Zusatz von Wasser, ggfs. Zusatzmitteln und Gesteinskörnung, zur Anwendung gelangt.

Ein Klinker kann bereits alle notwendigen bzw. gewünschten Phasen enthalten und nach Vermahlen zu Zement direkt als Bindemittel zum Einsatz kommen. Erfindungsgemäß wird die Zusammensetzung des Bindemittels durch Vermischen von zwei oder mehreren Klinkern und/oder Zementen erhalten, wobei das Vermischen bereits vor (oder während) dem Mahlen und/oder im gemahlenen Zustand und/oder bei der Herstellung des Bindemittels erfolgt. Soweit nicht ausdrücklich ein Zeitpunkt des Vermischens genannt ist, beziehen sich die folgenden Beschreibungen auf Bindemittel (und Zemente), die in dieser Beziehung nicht beschränkt sind.

Soweit nichts anderes angegeben ist, ist mit "reaktiv" eine hydraulische Reaktivität gemeint. Unter reaktiven Aluminium-Verbindungen, werden insbesondere Stoffe verstanden, die Aluminium nach der Zugabe von Wasser zur Reaktion bereitstellen.

Phasen, wie zum Beispiel C₅S₂$, werden vorrangig stöchiometrisch angegeben, jedoch kann die genaue Zusammensetzung abweichen/variieren. Des Weiteren können verschiedene Fremdionen aus der Gruppe der Halogene, Nichtmetalle, Alkali- und Erdalkalimetalle, sowie Vertreter der Übergangs- und Halbmetalle und Metalle in die Kristallstruktur der Phase eingebaut werden. Für den Ternesit-Klinker sind diese alle geeignet. Vorzugsweise wird zum Beispiel Phosphat, Fluorid, Bor, Nitrat, Chlorid, Natrium und/oder Kalium in die Struktur von C₅S₂$ eingebaut, wodurch diese stabilisiert wird (z.B. bei höheren Temperaturen > 1200°C).

Im erfindungsgemäßen Bindemittel wird zumindest ein latent-hydraulisches und/oder puzzolanisches Material mit Ternesit bzw. einem Ternesit-Klinker vermischt. Die Mengenanteile sind sehr variabel, vorzugsweise werden 5 bis 95 Gew.-% latent-hydraulisches und/oder puzzolanisches Material und 5 bis 95 Gew.-% Ternesitklinker eingesetzt. Bevorzugt sind 30 bis 85 Gew.-% latent-hydraulisches und/oder puzzolanisches Material und 15 bis 70 Gew.-% Ternesit, besonders bevorzugt 40 bis 80 Gew.-% latent-hydraulisches Material und 20 bis 60 Gew.-% Ternesit, wobei die Werte auf die gesamte Menge an Bindemittel bezogen sind und sich die Anteile mit den restlichen Bindemittelkomponenten zu 100% addieren.

Bevorzugte Puzzolane / latent hydraulische Materialien sind getemperte Tone (z.B. Metakaolin) und Schiefer, V und W Flugaschen mit hohem Glasanteil und/oder Gehalt an reaktiven Phasen, Hüttensande sowie künstliche (puzzolanische und latent hydraulische) Gläser.

Bevorzugt enthält das Bindemittel aus Ternesit / Ternesit-Klinker und latent-hydraulischem und/oder puzzolanischen Material außerdem Zusatzmittel und/oder Zusatzstoffe sowie ggfs. weitere hydraulisch aktive Komponenten und/oder Sulfatträger. Bei den Zusatzstoffen handelt es sich um hydraulisch nicht aktive Komponenten, wie zum Beispiel, aber nicht ausschließlich, gemahlener Kalkstein / Dolomit, gefälltes CaCO₃, Mg(OH)₂, Ca(OH)₂, CaO, Silica Fume und Glasmehl. Die Zusatzstoffe können in Summe in einer Menge im Bereich von 1 bis 25 Gew.-%, vorzugsweise von 3 bis 20 Gew.-% und noch stärker bevorzugt von 6 bis 15 Gew.-% dosiert werden.

Als Sulfat eignen sich besonders Alkali- und / oder Erdalkalisulfate, vorzugsweise in Form von Gips und / oder Halbhydrat und / oder Anhydrit und / oder Magnesiumsulfat und / oder Natriumsulfat und / oder Kaliumsulfat.

In einer bevorzugten Ausführungsform enthält das Bindemittel mindestens ein hydraulisches Material, vorzugsweise Portlandzement. Dabei kann der Portlandzement sowohl analog zu den Portlandhüttenzementen mengenmäßig überwiegen, als auch analog zu den Hochofen- und Kompositzementen vergleichbare Mengen Portlandklinker und Gemisch von latent-hydraulischem Material mit Ternesit bis hin zu überwiegend Gemisch von latent-hydraulischem Material mit Ternesit enthalten. Vorzugsweise kann das Bindemittel von 1 bis 70 Gew.-%, insbesondere von 5 bis 40 Gew.-% und besonders bevorzugt von 10 bis 25 Gew.-%, Portlandzement enthalten.

Ternsitklinker, das latent-hydraulische und/oder puzzolanische Material, sowie ggfs. vorhandene Zusätze, wie zum Beispiel Kalkstein und/oder Portlandzementklinker und/oder andere Klinker und/oder Sulfatträger, sind in dem erfindungsgemäßen Bindemittel auf eine Feinheit (nach Blaine) von 2000 bis 10000 cm²/g, vorzugsweise von 3000 bis 6000 cm²/g und besonders bevorzugt von 4000 bis 5000 cm²/g gemahlen. Die Mahlung kann in an sich bekannter Weise getrennt oder gemeinsam erfolgen.

Vorzugsweise enthält der Zement bzw. die Bindemittelmischung außerdem als Zusatzmittel einen oder mehrere Abbinde- und / oder Erhärtungsbeschleuniger, vorzugsweise ausgewählt unter Komponenten mit verfügbarem Aluminium beziehungsweise solchen, die in Kontakt mit Wasser Aluminium, zum Beispiel in der Form von Al(OH)₄⁻ oder amorphes Al(OH)₃-Gel, freisetzen, wie zum Beispiel, aber nicht ausschließlich, lösliche Alkali-/Erdalkalialuminate und Aluminiumsalze (z.B. Na₂Al₂O₄, K₂Al₂O₄, Aluminiumnitrat, -acetate, -chlorid, - formiat, -sulfat, etc.), reaktives und/oder amorphes Aluminiumhydroxid (z.B. Al(OH)₃), Calciumaluminat-, Calciumsulfoaluminatzement und/oder Geopolymer Binder. Des Weiteren kann der Zement bzw. die Bindemittelmischung als Zusatzmittel einen oder mehrere Abbinde- und / oder Erhärtungsbeschleuniger, ebenfalls in Kombination mit den vorgenannten Komponenten mit verfügbarem Aluminium, vorzugsweise ausgewählt unter Lithiumsalzen und -hydroxiden, anderen Alkalisalzen und -hydroxiden, Alkalisilikaten enthalten. Die Abbinde- und / oder Erhärtungsbeschleuniger können in Summe in einer Menge im Bereich von 0,01 bis 15 Gew.-%, vorzugsweise von 0,5 bis 8 Gew.-% und noch stärker bevorzugt von 1 bis 5 Gew.-% dosiert werden

Erhärtungsbeschleunigende Zusätze, wie zum Beispiel Alkali/Erdalkali-Aluminate, Aluminiumsalze, Alkalisalze, -silikate und -hydroxide, welche den pH-Wert der Lösung und damit einhergehend die Reaktivität von C₅S₂$ zusätzlich erhöhen, sind besonders bevorzugt.

Es ist weiter bevorzugt, wenn Betonverflüssiger und / oder Fließmittel und / oder Verzögerer, vorzugsweise auf Basis von Ligninsulfonaten, sulfoniertem Naphthalin-, Melamin- oder Phenolformaldehydkondensat, oder auf Basis von Acrylsäure- Acrylamidgemischen oder Polycarboxylatethern oder auf Basis von phosphatierten Polykondensaten, phosphatierten Alkylcarbonsäure und Salzen dieser, (Hydroxy)-Carbonsäuren und Carboxylate, Borax, Borsäure und Borate, Oxalate, Sulfanilsäure, Aminocarbonsäuren, Salizylsäure und Acetylsalizylsäure, Dialdehyde enthalten sind.

Das erfindungsgemäße Bindemittel kann in an sich bekannter Weise für alle Anwendungen, in denen ansonsten Portlandzement, Portlandhüttenzement, Kompositzement usw. verwendet werden, zum Einsatz kommen. In der Regel wird das Bindemittel zum Einsatz mit Gesteinskörnungen und ggfs. weiteren Zusätzen z.B. zu Beton, Mörtel, Putz, Estrich etc. vermischt und mit Wasser angemacht.

Bei der Verarbeitung des erfindungsgemäßen Bindemittels ist ein Wasser / Bindemittelwert von 0,2 bis 2 geeignet, bevorzugt von 0,3 bis 0,8 und besonders bevorzugt von 0,35 bis 0,5.

Der erfindungsgemäße Zement bzw. das erfindungsgemäße Bindemittel eignet sich hervorragend zur Verfestigung von Altlasten. Hierbei ist ein Gehalt an adsorptiv wirksamen Zusatzstoffen, z.B. Zeolithen und / oder lonenaustauscherharzen, bevorzugt. Bei der Immobilisierung von Schwermetallen in anorganischen Bindemitteln kann ein hoher pH-Wert von Vorteil sein, der die Bildung schwer löslicher Hydroxide begünstigt. Dies kann zum Beispiel, aber nicht ausschließlich, durch ein Mischen des erfindungsgemäßen Bindemittels mit Portlandzement und/oder Alkalisalzen und -hydroxiden realisiert werden.

Ein weiterer Vorteil der erfindungsgemäßen Zements bzw. der Bindemittelmischung daraus ist die Bildung verschiedener Phasen im Zuge der Hydratation (z.B. Ettringit [AFₜ], Monophasen [AFₘ], Metall-Metall Hydroxisalze [LDH], etc..), die verschiedene Schwermetalle sowie weitere Schadstoffe (zum Beispiel, Chloride, etc.) in ihrer Struktur einbauen und somit dauerhaft fixieren können.

Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Beispiele

In Tabelle 2 sind die verwendeten latent-hydraulischen und/oder puzzolanischen Materialien bzw. Rohstoffe, mit denen die im Folgenden beschriebenen Beispiele durchgeführt wurden, anhand ihrer oxidischen Hauptbestandteile und ihrer Mahlfeinheit charakterisiert. Der Gewichtsverlust nach einem Tempern bei 1050 °C ist ebenfalls angegeben. Tabelle 3 zeigt die mineralogische Phasenzusammensetzung der verwendeten latent-hydraulischen und/oder puzzolanischen Materialien.

**Tabelle 2: Elementare Zusammensetzung der verwendeten Rohstoffe (RFA)**

| Material | | Kalkstein | Hüttens. | Flugasche | | | Sulfat | Al-Korr. | Metakaolin |
|---|---|---|---|---|---|---|---|---|---|
| Probe | | K1 | BFS | FA1 | FA2 | FA3 | MicroA | Al(OH)₃ | MK |
| RFA | Einheit | | | | | | | | |
| GV 1050 °C | % | 43,09 | 1,80 | 0,82 | 0,10 | 2,79 | 4,64 | 34,64 | 1,91 |
| SiO₂ | | 1,53 | 36,48 | 28,50 | 45,60 | 47,44 | 4,17 | -- | 48,00 |
| Al₂O3 | | 0,35 | 11,58 | 12,50 | 20,60 | 27,88 | 1,36 | 65,36 | 41,60 |
| TiO₂ | | 0,03 | 0,88 | 1,05 | 0,68 | 1,38 | 0,04 | -- | 0,00 |
| MnO | | 0,01 | 0,37 | 0,18 | 0,05 | 0,06 | 0,00 | -- | 0,00 |
| Fe₂O₃ | | 0,19 | 0,52 | 5,18 | 8,17 | 5,89 | 0,37 | -- | 1,80 |
| CaO | | 54,50 | 38,46 | 37,40 | 19,3 | 7,54 | 37,40 | -- | 5,70 |
| MgO | | 0,22 | 7,52 | 4,81 | 2,17 | 2,48 | 1,82 | -- | 0,10 |
| K₂O | | 0,04 | 0,44 | 0,28 | 1,63 | 1,46 | 0,28 | -- | 0,95 |
| Na₂O | | 0,00 | 0,18 | 0,07 | 0,30 | 0,59 | 0,06 | -- | 0,00 |
| SO₃ | | 0,01 | 2,19 | 7,71 | 1,13 | 0,29 | 49,80 | -- | 0,00 |
| P₂O₅ | | 0,01 | 0,00 | 1,27 | 0,22 | 1,77 | 0,00 | -- | 0,00 |
| Summe | | 99,98 | 100,42 | 99,77 | 99,95 | 99,67 | 99,94 | 100,00 | 100,06 |
| | | | | | | | | | |
| Amorph | % | / | >99 | 38,0 | 88,0 | 58,9 | -- | -- | >95 |
| Dichte | g/cm³ | 2,64 | 2,81 | 2,82 | 2,66 | 2,30 | -- | -- | 2,54 |
| Mahlfeinheit nach Blaine | cm²/g | 3350 | 4370 | 4380 | 5500 | 4270 | -- | -- | -- |

**Tabelle 3: Mineralogische Phasenzusammensetzung der verwendeten Flugaschen (QXRD nach Rietveld)**

| Mineral | Einheit | FA1 | FA2 | FA3 |
|---|---|---|---|---|
| Quarz | | 11,5 | 1,3 | 9,8 |
| Cristobalit | | 0,4 | -- | -- |
| Freikalk | | 9,3 | 2,8 | 1,1 |
| Periklas | | 2,8 | -- | 0,9 |
| Anhydrit | | 10,4 | 1,3 | 0,6 |
| Mullit | | -- | 1,9 | 25,1 |
| Gehlenit | | 6,3 | -- | -- |
| Merwinit | | 4,9 | -- | -- |
| Maghemit | Gew.-% | 1,2 | 1,6 | 1,4 |
| Hämatit | | 0,9 | -- | 0,8 |
| Rutil | | -- | -- | 0,3 |
| Ye'elimit | | 3,1 | -- | -- |
| C₃S | | -- | 1,0 | -- |
| C₂S | | 8,1 | 1,4 | 1,1 |
| C₄AF | | 3,1 | 0,7 | -- |
| Amorph | | 38,0 | 88,0 | 58,9 |

### Beispiel 1 Tₚᵤᵣ

Eine stöchiometrische Mischung aus CaCO₃ [Merck, p.a.], CaSO₄ [Merck, p.a.] und Quarzmehl [Merck, p.a.] wurde 1h bei 1100°C gebrannt, anschließend rapide gekühlt, gemahlen und ein weiteres Mal 1h bei 1100°C gebrannt und rapide gekühlt.

### Beispiel 2 TK_{FA}

Die Rohmischung bestand aus 45 Gew.-% Kalkstein (K1) + 27 Gew.-% FA1, 20 Gew.-% MicroA und 8 Gew.-% Quarzmehl (Merck, p.a.). Das Rohmehl wurde in bei 1100°C gesintert und durchlief nach dem Sintern zur Temperung ein Kühlprogramm bei dem die Temperatur über etwa 35 min von 1100°C auf 850°C gesenkt wurde. Der Klinker wurde dann rapide an der Luft abgekühlt.

### Beispiel 3 TK_{AGS}

Die Rohmischung bestand aus 58 Gew.-% K1 + 8 Gew.-% MK, 24 Gew.-% MircoA und 10 Gew.-% Quarzmehl (Merck, p.a.). Das Rohmehl durchlief dasselbe Programm wie in Beispiel 2.

Die berechnete chemische und die gemessene (QXRD nach Rietveld) mineralogische Zusammensetzung der Ternesit-Klinkerqualitäten aus den Beispiels 1 bis 3 sind in Tabelle 4 angegeben.

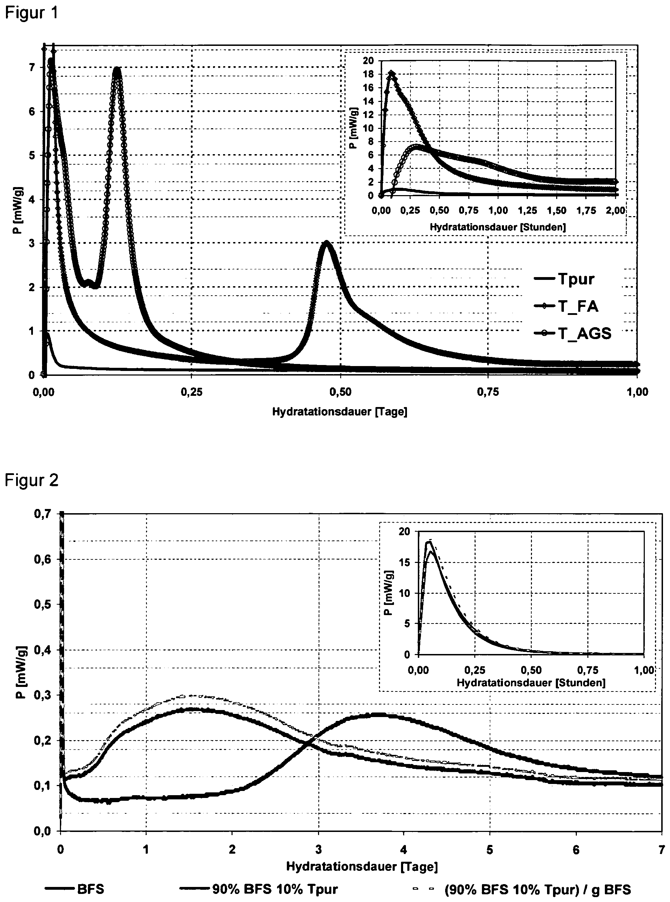

Die Messung des Hydratationsverlaufs an einer Paste mit Wasser/Bindemittelwert (W/B) = 0,50, hergestellt aus den verschiedenen Ternesit-Klinkerqualitäten entsprechend den Beispielen 1 bis 3, mit einem isothermen Differentialkalorimeter (TAM air) ist als Ausschnitt (nur bis 1 Tag, da anschließend, bei allen Proben, keine weitere Zunahme zu verzeichnen war) in Figur 1 dargestellt. Bei der Paste aus Tₚᵤᵣ zeigt sich innerhalb von 24 Stunden keine nennenswerte Wärmeentwicklung. Bei den Pasten aus und TK_{AGS} zeigt sich bereits innerhalb von rund 4 Stunden bzw. 12 Stunden eine deutliche Wärmeentwicklung, welche eine hydraulische Reaktion anzeigt.

**Tabelle 4: Chemische und mineralogische Zusammensetzung der Klinker**

| **Oxide** | **Tₚᵤᵣ** | **TK_{FA}** | **TK_{AGS}** |
|---|---|---|---|
| | **%** | | |
| SiO₂ | 25,00 | 21,30 | 22,16 |
| Al₂O₃ | -- | 4,75 | 4,94 |
| TiO₂ | -- | 0,38 | 0,04 |
| MnO | -- | 0,07 | 0,01 |
| Fe₂O₃ | -- | 1,96 | 0,45 |
| CaO | 58,34 | 53,20 | 55,34 |
| MgO | -- | 2,23 | 0,77 |
| K₂O | -- | 0,19 | 0,22 |
| Na₂O | -- | 0,04 | 0,02 |
| SO₃ | 16,66 | 15,44 | 16,06 |
| P₂O₅ | -- | 0,44 | 0,01 |
| | | | |

| **Phasen** | **Gew.-%** | | |
|---|---|---|---|
| Anhydrit | 0,4 | 0,3 | 0,2 |
| C₃A (cub) | -- | 2,2 | -- |
| C₃A (orth) | -- | 1,2 | 0,4 |
| C₂Sa'_{H} | -- | 2,7 | 1,4 |
| C₂S beta | -- | 5,7 | 3,2 |
| C₂S gamma | -- | 1,1 | 0,4 |
| ∑C₂S | -- | 9,5 | 5,0 |
| Ternesit | 99,2 | 74,9 | 85,5 |
| Freikalk | <0,1 | 0,3 | 0,3 |
| Periklas | -- | 1,2 | 0,5 |
| C₄A₃S | -- | 9,3 | 7,0 |
| Augit | -- | 1,2 | 1,1 |
| Quarz | 0,4 | -- | -- |
| | | | |

| **Verhältnisse** | | | |
|---|---|---|---|
| CaO/Al₂O₃ | -- | 11,21 | 11,21 |
| Al₂O₃/Fe₂O₃ | -- | 2,42 | 10,92 |
| SO₃/(Al₂O₃+Fe₂O₃) | -- | 2,30 | 2,98 |
| SO₃/SiO₂ | 0,67 | 0,72 | 0,72 |
| CaO/SO₃ | 3,50 | 3,45 | 3,45 |
| CaO/SiO₂ | 2,33 | 2,50 | 2,50 |
| MgO/SiO₂ | 0,00 | 0,10 | 0,03 |

### Beispiel 4

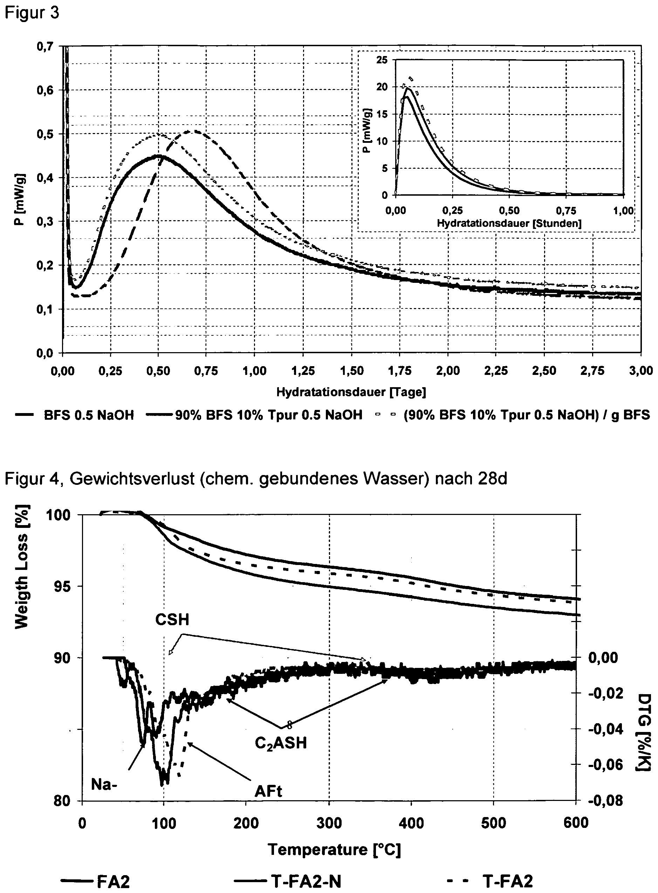

Mischungen aus Hüttensand (BFS), Ternesit (Tₚᵤᵣ) von Beispiel 1, mit und ohne Zusatz von 0,5 Teile NaOH pro 100 Teile Mischung wie in Tabelle 5 angegeben, wurden hergestellt. Die Messung des Hydratationsverlaufs an Pasten mit einem W/B = 0,50 mit einem isothermen Differentialkalorimeter (TAM air) über 7 Tage ist in Figur 2 und 3 dargestellt. Bei den Pasten enthaltend Tₚᵤᵣ zeigt sich im Vergleich zum reinen BFS eine deutliche Verschiebung der Wärmeentwicklung hin zu früheren Zeiten.

**Tabelle 5: Mischungen BFS, Tₚᵤᵣ und NaOH**

| Mischung | BFS | Tₚᵤᵣ | Teile NaOH / 100 Teile Mischung |
|---|---|---|---|
| | [%] | | |
| BFS | 100 | | |
| BFS 0.5NaOH | 100 | | 0,5 |
| BFS Tₚᵤᵣ | 90 | 10 | |
| BFS Tₚᵤᵣ 0.5NaOH | 90 | 10 | 0,5 |

### Beispiel 5

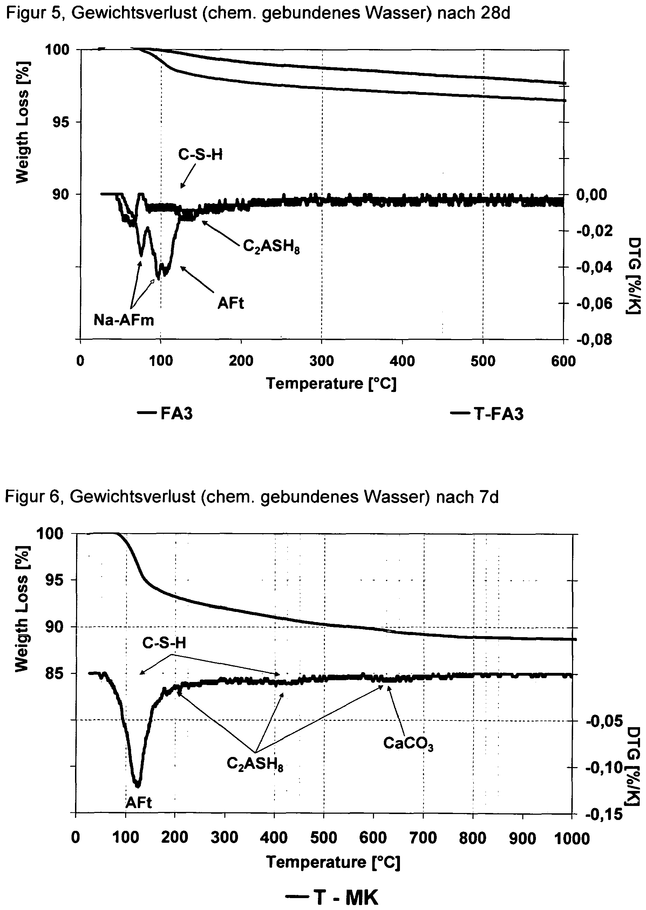

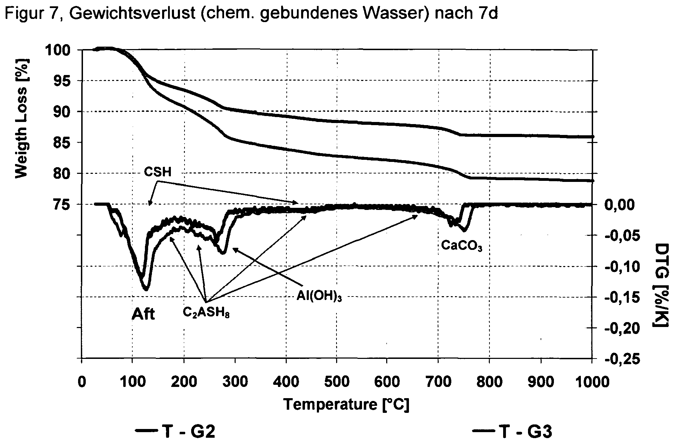

Tₚᵤᵣ wurde in verschiedenen Verhältnissen mit Metakaolin (MK), Flugasche (FA2 oder FA3) und Al(OH)₃-amorph (Geloxal, Sika) gemischt. Als Vergleichsproben wurden Mischungen des reinen Tₚᵤᵣ, Metakaolin (MK) und der Flugaschen, sowie Mischungen von Portlandit (Merck, p.a.) mit Metakaolin (MK) oder den Flugaschen angesetzt. Aus den Mischungen wurden mit dest. Wasser Pasten mit W/B = 0,5 hergestellt und in luftdicht schließenden Plastikbeuteln bei 20°C gelagert. Die Zusammensetzungen der Mischungen sind in Tabelle 6 angegeben. Ausgewählte thermogravimetrische Messungen sind in den Figuren 4 bis 7 dargestellt.

Es zeigte sich, dass die reinen Ausgangsstoffe über den gesamten erfassten Zeitraum nach dem Anmachen mit Wasser keine nennenswerte Verfestigung der Pasten aufweisen. Einige Pasten, die mit Portlandit hergestellt wurden, zeigten zwischen 7 und 28 Tagen eine leichte bis deutliche Verfestigung. Demgegenüber zeigten Pasten, die erfindungsgemäß mit Tₚᵤᵣ hergestellt wurden, teilweise bereits innerhalb von 2 - 6 Stunden eine deutliche Verfestigung und nachfolgende Erhärtung. Mischungen aus MK und Tₚᵤᵣ zeigten schon nach 1 Tag eine sehr hohe Festigkeitsentwicklung. In der Tabelle 7 sind die Ergebnisse dieser Versuche zusammengestellt. Ein oder mehrere "+" zeigen dabei die Verfestigung und den zunehmenden Härtegrad der Paste an, wobei "+++" für eine sehr hohe Festigkeit steht. Bei vergleichenden Mörtel- und Druckfestigkeitsversuchen korrelierte "+++" mit einer Festigkeit zwischen 2 und 10 MPa. Ein "-" zeigt an, dass keine wahrnehmbare Verfestigung eingetreten ist.

**Tabelle 6**

| Mischung | Tpur | FA2 | FA3 | MK | Geloxal | Ca(OH)₂ | Teile NaOH / 100 Teile Mischung |
|---|---|---|---|---|---|---|---|
| | % | | | | | | |
| T | 100 | | | | | | |
| FA2 | | 100 | | | | | 0,5 |
| FA3 | | | 100 | | | | 0,5 |
| MK | | | | 100 | | | |
| G | | | | | 100 | | |
| T-P | 70 | | | | | 30 | |
| FA2-P | | 70 | | | | 30 | |
| FA3-P | | | 70 | | | 30 | |
| MK-P | | | | 70 | | 30 | |
| G-P | | | | | 70 | 30 | |
| T-FA2 | 70 | 30 | | | | | |
| T-FA2-N | 70 | 30 | | | | | 0,5 |
| T-FA3 | 70 | | 30 | | | | 0,5 |
| T-MK | 70 | | | 30 | | | |
| T-G2 | 80 | | | | 20 | | |
| T-G3 | 70 | | | | 30 | | |

**Tabelle 7**

| Mischung | Zeit | | | | | | | |
|---|---|---|---|---|---|---|---|---|
| | 1h | 2h | 4h | 6h | 1d | 2d | 7d | 28d |
| T | - | - | - | - | - | - | - | - |
| FA2 | - | - | - | - | -/+ | -/+ | -/+ | + |
| FA3 | - | - | - | - | - | - | -/+ | -/+ |
| MK | - | - | - | - | - | - | - | - |
| G | - | - | - | - | - | - | - | - |
| T-P | - | - | - | - | - | - | - | - |
| FA2-P | - | - | - | -/+ | -/+ | -/+ | + | ++ |
| FA3-P | - | - | - | -/+ | -/+ | -/+ | -/+ | -/+ |
| MK-P | - | - | - | - | -/+ | + | ++ | +++ |
| G-P | - | - | - | - | -/+ | -/+ | + | + |
| T-FA2 | - | -/+ | - / + | -/+ | + | + | ++ | +++ |
| T-FA2-N | -/+ | -/+ | + | + | + | ++ | ++ | +++ |
| T-FA3 | - | - | - | -/+ | -/+ | + | + | ++ |
| T-MK | + | + | ++ | ++ | +++ | +++ | +++ | +++ |
| T-G2 | + | + | ++ | ++ | ++ | +++ | +++ | +++ |
| T-G3 | + | ++ | ++ | ++ | +++ | +++ | +++ | +++ |

### Beispiel 6

Tₚᵤᵣ wurde in verschiedenen Verhältnissen mit Hüttensand (BFS), +/- Portlandzement (OPC) (CEMI 42.5, Werk Leimen, HeidelbergCement AG, DE) zu einem Bindemittel gemischt (siehe Tabelle 8). Die Mischung der Bindemittel mit einem Quarzsand (ISS1 [Industrie-Strahl-Sand], Fraktion zwischen 0,5 und 1 mm) im Verhältnis 1 zu 2 und einem W/B = 0,4 ergaben die zu testenden Mörtel, aus denen Kleinprismen (2*2*2 cm) hergestellt wurden. In Tabelle 8 sind auch die Druckfestigkeitsentwicklungen nach 2, 7 und 28 Tagen dargestellt (Mittelwert aus je 3 Messungen). Zusätzliche Mörtelprismen, ausschließlich hergestellt aus OPC und Quarzsand (W/B = 0,5), dienen als Referenz und Anhaltspunkt für die Vergleichbarkeit der Messergebnisse mit Normmörteln nach EN 197-1.

**Tabelle 8**

| Mischung | Tpur | BFS | OPC | Binder: ISS1 | W/B | Druckfestigkeit [MPa] | | |
|---|---|---|---|---|---|---|---|---|
| | % | | | | | 2d | 7d | 28d |
| 1 | | 100 | | 1 : 2 | 0,4 | 0 | 1 | 9 |
| 2 | 10 | 90 | | | | 2 | 5 | 17 |
| 3 | 20 | 80 | | | | 4 | 8 | 21 |
| 4 | 40 | 60 | | | | 6 | 7 | 15 |
| 5 | 15 | 80 | 5 | | | 4 | 17 | 35 |
| 6 | 35 | 60 | 5 | | | 4 | 15 | 28 |
| 7 | | 95 | 5 | | | 1 | 15 | |
| 8 | | | 100 | | 0,5 | 19 | -- | 45 |
| 9 | | | 100 | 1 : 1 | | 21 | -- | 70 |

Es zeigte sich, dass Ternesit in der Lage ist, ein latent-hydraulisches Material, wie Hüttensand, zur Reaktion anzuregen. Mischungen aus Hüttensand und Ternesit ergaben über den beprobten Zeitraum hinweg eine signifikant erhöhte Festigkeitsentwicklung.

Des Weiterem hat sich gezeigt, dass die Zugabe von OPC zu Bindemitteln aus Hüttensand und Ternesit die Festigkeitsentwicklung positiv beeinflusst. Die Festigkeitsentwicklung von Bindemitteln aus OPC und Hüttensand ist im Vergleich mit Ternesit enthaltenden Proben langsamer.

## Patentansprüche

1. Hydraulisches Bindemittel umfassend bezogen auf das gesamte Bindemittel von 95 bis 5 Gew.-% mindestens eines latent-hydraulischen und/oder mindestens eines puzzolanischen Materials, **dadurch gekennzeichnet, dass** bezogen auf das gesamte Bindemittel von 5 bis 95 Gew.-% Ternesit als Anreger enthalten ist, wobei sich die Anteile mit denen der restlichen Bindemittelkomponenten zu 100 % addieren.

2. Bindemittel gemäß Anspruch 1, **dadurch gekennzeichnet, dass** bezogen auf das gesamte Bindemittel von 15 bis 70 Gew.-%, insbesondere von 20 bis 60 Gew.-% Ternesit und von 30 bis 85 Gew.-%, insbesondere von 80 bis 40 Gew.-% latent-hydraulisches und/oder puzzolanisches Material enthalten ist, wobei sich die Anteile mit denen der restlichen Bindemittelkomponenten zu 100 % addieren.

3. Bindemittel gemäß Anspruch 1 oder 2, **dadurch gekennzeichnet, dass** mindestens ein latent-hydraulisches Material, ausgewählt unter Hüttensand, kalkreiche Flugaschen, latent-hydraulischem Trass, latent-hydraulischem Ziegelmehl, latent-hydraulischen getemperten Tonen, latent-hydraulischen künstlichen Gläsern und Gemischen davon enthalten ist.

4. Bindemittel gemäß einem der Ansprüche 1 bis 3, **dadurch gekennzeichnet, dass** mindestens ein puzzolanisches Material ausgewählt unter puzzolanischem Trass, puzzolanischem Ziegelmehl, kalkarmer Flugasche, Schiefer, puzzolanischem künstlichem Glas und Gemischen davon enthalten ist.

5. Bindemittel gemäß einem der Ansprüche 1 bis 4, **dadurch gekennzeichnet, dass** ein hydraulisches Material, vorzugsweise ausgewählt unter Portlandzement und gemahlenem Portlandzementklinker oder Calciumaluminatzement, Geopolymerzement, Calciumsulfoaluminatzement und Gemischen davon enthalten ist.

6. Bindemittel gemäß Anspruch 5, **dadurch gekennzeichnet, dass** von 1 bis 70 Gew.-% hydraulisches Material, von 5 bis 90 Gew.-% Ternesit und von 9 bis 94 Gew.-% latent-hydraulisches und/oder puzzolanisches Material enthalten sind, wobei sich die Anteile mit denen der restlichen Bindemittelkomponenten zu 100 % addieren.

7. Bindemittel gemäß einem der Ansprüche 1 bis 6, **dadurch gekennzeichnet, dass** Zusatzmittel und/oder Zusatzstoffe enthalten sind.

8. Bindemittel gemäß Anspruch 7, **dadurch gekennzeichnet, dass** es als Zusatzstoffe nicht hydraulisch reaktive Materialien, wie gemahlenen Kalkstein / Dolomit, gefälltes CaCO₃, Ca(OH)₂, Mg(OH)₂, Silica fume und/oder Glasmehl, in einem Bereich von 1 bis 30 Gew.-%, vorzugsweise von 5 bis 20 Gew.-% enthält.

9. Bindemittel gemäß Anspruch 7 oder 8, **dadurch gekennzeichnet, dass** es als Zusatzmittel einen oder mehrere Abbinde- und / oder Erhärtungsbeschleuniger enthält, vorzugsweise ausgewählt unter Komponenten mit verfügbarem Aluminium, die in Kontakt mit Wasser Aluminium, zum Beispiel in der Form von Al(OH)₄⁻ oder amorphen Aluminiumhydroxid, freisetzen, wie zum Beispiel lösliche Alkali-/Erdalkalialuminate und Aluminiumsalze (z.B. Na₂Al₂O₄, K₂Al₂O₄, Aluminiumnitrat, -acetate, -chlorid, -formiat, -sulfat, etc.), reaktives und/oder amorphes Aluminiumhydroxid (z.B. Al(OH)₃) in einer Menge im Bereich von 0,01 bis 15 Gew.-%, vorzugsweise von 0,5 bis 8 Gew.-%.

10. Bindemittel gemäß mindestens einem der Ansprüche 1 bis 9, **dadurch gekennzeichnet, dass** es als Zusatzmittel oder weitere Zusatzmittel Lithiumsalze und -hydroxide und/oder andere Alkalisalze und -hydroxide und Alkalisilikate enthält, wobei Zusatzmittel, wie zum Beispiel Alkalisalze, -silikate und -hydroxide, welche den pH-Wert der Lösung und damit einhergehend die Reaktivität von C₅S₂$ erhöhen, besonders bevorzugt sind.

11. Bindemittel gemäß einem der Ansprüche 1 bis 10, **dadurch gekennzeichnet, dass** als Ternesit ein Ternesit-Klinker verwendet wird, der durch Sintern einer Rohmehlmischung, welche zumindest Quellen für CaO, SiO₂ und SO₃ enthält, bei 900 bis 1300 °C erhältlich ist und bezogen auf die gesamte Menge an Ternesit-Klinker folgende Komponenten aufweist:
C₅S₂$ 10 bis 100 Gew.-%,
bevorzugt 30 bis 95 Gew.-% und noch stärker bevorzugt 40 bis 90 Gew.-%
(α, β) C₂S 0 bis 90 Gew.-%,
bevorzugt 5 bis 70 Gew.-% und noch stärker bevorzugt 10 bis 60 Gew.-% C₄(AₓF₍₁₋ₓ₎)₃$ 0 bis 30 Gew.-%,
bevorzugt 3 bis 25 Gew.-% und noch stärker bevorzugt 5 bis 20 Gew.-% C₂(A_{y}F_{(1-y)}) 0 bis 30 Gew.-%,
bevorzugt 5 bis 20 Gew.-% und noch stärker bevorzugt 8 bis 15 Gew.-% Reaktive Aluminate 0 bis 20 Gew.-%,
bevorzugt 1 bis 15 Gew.-% und noch stärker bevorzugt 3 bis 10 Gew.-% Periklas (M) 0 bis 25 Gew.-%,
bevorzugt 1 bis 15 Gew.-% und noch stärker bevorzugt 2 bis 10 Gew.-% Nebenphasen 0 bis 30 Gew.-%,
bevorzugt 3 bis 20 Gew.-% und noch stärker bevorzugt 5 bis 10 Gew.-%,
wobei sich die Anteile zu 100 % addieren.

12. Verwendung eines Bindemittels gemäß einem der Ansprüche 1 bis 11 in Kombination mit Gesteinskörnungen zur Herstellung von Beton, Mörtel oder Putz wobei ein Wasser/Bindemittelwert von 0,2 bis 2 eingestellt wird.

13. Verwendung eines Bindemittels gemäß einem der Ansprüche 1 bis 11 zur Immobilisierung von Schadstoffen oder als Dichtwandmasse, wobei vorzugsweise adsorptiv wirksame Zusätze wie Zeolithe und/oder lonenaustauscherharze, zugefügt werden.

14. Verwendung von Ternesit als Additiv zur Anregung von latent-hydraulischen und/oder puzzolanischen Materialien, **dadurch gekennzeichnet, dass** Ternesit mit den latent-hydraulischen und/oder puzzolanischen Materialien gemischt wird und beide gemeinsam, ggfs. unter Zusatz weiterer Komponenten, zu Zement gemahlen werden oder der gemahlene Ternesit mit den gemahlenen latent-hydraulischen und/oder puzzolanischen Materialien, ggfs. unter Zusatz weiterer Komponenten, zu dem Bindemittel vermischt werden.

15. Verwendung gemäß Anspruch 14, **dadurch gekennzeichnet, dass** bezogen auf das gesamte Bindemittel von 5 bis 95 Gew.-%, vorzugsweise von 15 bis 70 Gew.-%, insbesondere von 20 bis 60 Gew.-% Ternesit und von 95 bis 5 Gew.-%, vorzugsweise von 30 bis 85 Gew.-%, insbesondere von 80 bis 40 Gew.-% latent-hydraulisches und/oder puzzolanisches Material enthalten ist, wobei sich die Anteile mit denen der restlichen Bindemittelkomponenten zu 100 % addieren.

16. Verwendung gemäß Anspruch 14 oder 15, **dadurch gekennzeichnet, dass** mindestens ein Alkali- und/oder Erdalkalihydroxid als zusätzlicher Anreger verwendet wird.

17. Verwendung gemäß einem der Ansprüche 14 bis 16, **dadurch gekennzeichnet, dass** von 1 bis 70 Gew.-% hydraulisches Material, vorzugsweise Portlandzement, von 5 bis 90 Gew.-% Ternesit und von 9 bis 94 Gew.-% latent-hydraulisches und/oder puzzolanisches Material enthalten sind, wobei sich die Anteile mit denen der restlichen Bindemittelkomponenten zu 100 % addieren.

18. Verfahren zur Anregung von latent-hydraulischem und/oder puzzolanischem Material in hydraulischen Bindemitteln, **dadurch gekennzeichnet, dass** Ternesit zugesetzt wird.

19. Verfahren gemäß Anspruch 18, **dadurch gekennzeichnet, dass** bezogen auf das gesamte Bindemittel von 5 bis 95 Gew.-%, vorzugsweise von 15 bis 70 Gew.-%, insbesondere von 20 bis 60 Gew.-% Ternesit zugesetzt ist.

20. Verfahren gemäß Anspruch 18, **dadurch gekennzeichnet, dass** Ternesit mit den latent-hydraulischen und/oder puzzolanischen Materialien gemischt wird und beide gemeinsam, ggfs. unter Zusatz weiterer Komponenten, zu Zement gemahlen werden oder der gemahlene Ternesit mit den gemahlenen latent-hydraulischen und/oder puzzolanischen Materialien, ggfs. unter Zusatz weiterer Komponenten, zu dem Bindemittel vermischt werden.

## Claims

1. A hydraulic binder comprising relative to the total binder 95 to 5 % by weight of at least one latently hydraulic material and/or at least one pozzolanic material, **characterized in that** relative to the total binder 5 to 95 % by weight of ternesite is contained as an activator, wherein the portions in combination with those of the remaining binder components add up to 100%.

2. The binder according to claim 1, **characterized in that**, relative to the total binder 15 to 70 % by weight, in particular 20 to 60 % by weight of ternesite and 30 to 85 % by weight, in particular 80 to 40 % by weight of latently hydraulic and/or pozzolanic material is contained, wherein the portions in combination with those of the remaining binder components add up to 100%.

3. The binder according to claim 1 or 2, **characterized in that** at least one latently hydraulic material selected from ground granulated blast furnace slag, lime-rich fly ashes, latently hydraulic trass, latently hydraulic grog, latently hydraulic tempered clay, latently hydraulic artificial glasses and mixtures thereof is contained.

4. The binder according to one of the claims 1 to 3, **characterized in that** at least one pozzolanic material selected from pozzolanic trass, pozzolanic grog, lime-poor fly ash, shale, pozzolanic artificial glass and mixtures thereof is contained.

5. The binder according to one of the claims 1 to 4, **characterized in that** a hydraulic material preferably selected from Portland cement and ground Portland cement clinker or calcium aluminate cement, geopolymer cement, calcium sulfoaluminate cement and mixtures thereof is contained.

6. The binder according to claim 5, **characterized in that** 1 to 70 % by weight of hydraulic material, 5 to 90 % by weight of ternesite and 9 to 94 % by weight of latently hydraulic and/or pozzolanic material is contained, wherein the portions in combination with those of the remaining binder components add up to 100%.

7. The binder according to one of the claims 1 to 6, **characterized in that** admixtures and/or additives are contained.

8. The binder according to claim 7, **characterized in that** it contains, as additives, non-hydraulically reactive materials such as ground limestone / dolomite, precipitated CaCO₃, Ca(OH)₂, Mg(OH)₂, silica fume and/or glass powder in a range of 1 to 30 % by weight, preferably 5 to 20 % by weight.

9. The binder according to claims 7 or 8, **characterized in that** it contains, as admixture, one or more setting and/or hardening accelerators, preferably selected from components having available aluminum, which release aluminum upon contact with water, for example in the form of Al(OH)₄⁻ or amorphous aluminum hydroxide, such as, for example, soluble alkali/alkaline earth aluminates and aluminium salts (e.g. Na₂Al₂O₄, K₂Al₂O₄, aluminium nitrate, aluminium acetate, aluminium chloride, aluminium formiate, aluminium sulphate, etc.), reactive and/or amorphous aluminium hydroxide (e.g. Al(OH)₃), in a quantity in the range of 0.01 to 15 % by weight, preferably 0.5 to 8 % by weight.

10. The binder according to at least one of the claims 1 to 9, **characterized in that** it contains, as admixture or additional admixture, lithium salts and lithium hydroxides and/or other alkali salts and alkali hydroxides and alkali silicates, wherein admixtures such as alkali salts, alkali silicates and alkali hydroxides, for example, which increase the pH value of the solution and, therefore, the reactivity of C₅S₂$, are particularly preferred.

11. The binder according to one of the claims 1 to 10, **characterized in that** as ternesite a ternesite clinker is used that is obtained by sintering a raw meal mixture containing at least sources for CaO, SiO₂ and SO₃ at 900 to 1300°C and contains the following components relative to the total quantity of ternesite clinker:
C₅S₂$ 10 to 100 % by weight,
preferably 30 to 95 % by weight and, more preferably, 40 to 90 % by weight
(α, β) C₂S 0 to 90 % by weight,
preferably 5 to 70 % by weight and, more preferably, 10 to 60 % by weight C₄(AₓF₍₁₋ₓ₎)₃$ 0 to 30 % by weight,
preferably 3 to 25 % by weight and, more preferably, 5 to 20 % by weight C₂(A_{y}F_{(1-y)}) 0 to 30 % by weight,
preferably 5 to 20 % by weight and, more preferably, 8 to 15 % by weight reactive aluminates 0 to 20 % by weight,
preferably 1 to 15 % by weight and, more preferably, 3 to 10 % by weight periclase (M) 0 to 25 % by weight,
preferably 1 to 15 % by weight and, more preferably, 2 to 10 % by weight secondary phases 0 to 30 % by weight,
preferably 3 to 20 % by weight and, more preferably, 5 to 10 % by weight,
wherein the portions add up to 100%.

12. A use of a binder according to one of the claims 1 to 11 in combination with mineral aggregates to produce concrete, mortar or plaster, wherein a water/binder value of 0.2 to 2 is set.

13. The use of a binder according to one of the claims 1 to 11 for immobilizing pollutants or as a sealing wall mass, wherein adsorptive additions such as zeolites and/or ion-exchange resins are added.

14. The use of ternesite as an additive for activating latently hydraulic and/or pozzolanic materials, **characterized in that** ternesite is mixed with the latently hydraulic and/or pozzolanic materials, and the two together, possibly with the addition of other components, are ground to form a cement, or the ground ternesite with the ground latently hydraulic and/or pozzolanic materials, possibly with the addition of other components, are mixed to form the binder.

15. The use according to claim 14, **characterized in that**, relative to the total binder, 5 to 95 % by weight, preferably 15 to 70 % by weight, in particular 20 to 60 % by weight of ternesite and 95 to 5 % by weight, preferably 30 to 85 % by weight, in particular 80 to 40 % by weight of latently hydraulic material and/or pozzolanic material is contained, wherein the portions in combination with those of the remaining binder components add up to 100%.

16. The use according to claim 14 or 15, **characterized in that** at least one alkali- and/or alkaline-earth hydroxide is used as an additional activator.

17. The use according to one of the claims 14 to 16, **characterized in that** 1 to 70 % by weight of hydraulic material, preferably Portland cement, 5 to 90 % by weight of ternesite and 9 to 94 % by weight of latently hydraulic and/or pozzolanic material is contained, wherein the portions in combination with those of the remaining binder components add up to 100%.

18. A method for activating latently hydraulic and/or pozzolanic material in hydraulic binders, **characterized in that** ternesite is added.

19. The method according to claim 18, **characterized in that**, relative to the total binder, 5 to 95 % by weight, preferably 15 to 70 % by weight, more particularly 20 to 60 % by weight of ternesite is added.

20. The method according to claim 18, **characterized in that**, ternesite is mixed with the latently hydraulic and/or pozzolanic materials, and both together, possibly with the addition of other components, are ground to form a cement, or the ground ternesite with the ground latently hydraulic and/or pozzolanic materials, possibly with the addition of other components, are mixed to form the binder.

## Revendications

1. Liant hydraulique comprenant, par rapport audit liant dans son intégralité, de 95 à 5 % en poids d'au moins un matériau à caractère hydraulique latent et/ou d'au moins un matériau pouzzolanique, **caractérisé en ce qu'**il contient, par rapport audit liant dans son intégralité, de 5 à 95 % en poids de ternésite en tant qu'activant, la somme des proportions étant, avec celles des autres constituants du liant, égale à 100 %.

2. Liant selon la revendication 1, **caractérisé en ce qu'**il contient, par rapport audit liant dans son intégralité, de 15 à 70 % en poids, notamment de 20 à 60 % en poids, de ternésite et de 30 à 85 % en poids, notamment de 80 à 40 % en poids d'un matériau à caractère hydraulique latent et/ou pouzzolanique, la somme des proportions étant, avec celles des autres constituants du liant, égale à 100 %.

3. Liant selon les revendications 1 ou 2, **caractérisé en ce qu'**il contient au moins un matériau à caractère hydraulique latent, choisi parmi le laitier granulé de haut-fourneau, les cendres volantes à haute teneur en calcaire, le trass à caractère hydraulique latent, les briques broyées à caractère hydraulique latent, les argiles thermiquement traitées à caractère hydraulique latent, les verres artificiels à caractère hydraulique latent et leurs mélanges.

4. Liant selon l'une des revendications 1 à 3, **caractérisé en ce qu'**il contient au moins un matériau pouzzolanique choisi parmi le trass pouzzolanique, les briques broyées pouzzolaniques, les cendres volantes à faible teneur en calcaire, le schiste, le verre artificiel pouzzolanique et leurs mélanges.

5. Liant selon l'une des revendications 1 à 4, **caractérisé en ce qu'**il contient un matériau hydraulique, choisi de préférence parmi le ciment Portland et le clinker de ciment Portland broyé ou le ciment calcio-aluminate, le ciment géopolymère, le ciment calcio-sulfoaluminate et leurs mélanges.

6. Liant selon la revendication 5, **caractérisé en ce qu'**il contient de 1 à 70 % en poids de matériau hydraulique, de 5 à 90 % en poids de ternésite et de 9 à 94 % en poids d'un matériau à caractère hydraulique latent et/ou pouzzolanique, la somme des proportions étant, avec celles des autres constituants du liant, égale à 100 %.

7. Liant selon l'une des revendications 1 à 6, **caractérisé en ce qu'**il contient des adjuvants et/ou des additifs.

8. Liant selon la revendication 7, **caractérisé en ce qu'**il contient, en tant qu'additifs, des matériaux sans réactivité hydraulique tels que le calcaire / la dolomite broyé(e), le CaCO₃ précipité, le Ca(OH)₂, le Mg(OH)₂, la fumée de silice et/ou la poudre de verre, dans un domaine allant de 1 à 30 % en poids, préférentiellement de 5 à 20 % en poids.

9. Liant selon les revendications 7 ou 8, **caractérisé en ce qu'**il contient, en tant qu'adjuvants, un ou plusieurs agents accélérateurs de prise et/ou de durcissement qui sont préférentiellement choisis parmi les constituants comportant de l'aluminium disponible et libérant, au contact avec l'eau, de l'aluminium par exemple sous forme de Al(OH)₄⁻ ou d'hydroxyde d'aluminium amorphe, comme par exemple parmi les aluminates alcalins/alcalino-terreux solubles et les sels d'aluminium (par exemple, le Na₂Al₂O₄, le K₂Al₂O₄, le nitrate, l'acétate, le chlorure, le formiate, le sulfate d'aluminium, etc.), l'hydroxyde d'aluminium réactif et/ou amorphe (par exemple, le Al(OH)₃), dans une quantité comprise entre 0,01 et 15 % en poids, de préférence entre 0,5 et 8 % en poids.

10. Liant selon au moins une des revendications 1 à 9, **caractérisé en ce qu'**il contient, en tant qu'adjuvants ou adjuvants supplémentaires, des sels et hydroxydes de lithium et/ou d'autres sels et hydroxydes alcalins et des silicates alcalins, les adjuvants capables d'augmenter le pH de la solution et ainsi la réactivité de C₅S₂$ étant particulièrement préférés, s'agissant par exemple de sels, silicates et hydroxydes alcalins.

11. Liant selon l'une des revendications 1 à 10, **caractérisé en ce que** l'on utilise, en tant que ternésite, un clinker de ternésite lequel peut être obtenu en soumettant à un frittage un mélange de poudres crues lequel contient au moins des sources de CaO, de SiO₂ et de SO₃, lequel peut être obtenu à 900 à 1 300 °C et lequel comporte les constituants suivants, par rapport à la quantité totale de clinker de ternésite:
C₅S₂$ 10 à 100 % en poids,
de préférence 30 à 95 % en poids et, de manière encore plus préférée, 40 à 90 % en poids
(α, β) C₂S 0 à 90 % en poids,
de préférence 5 à 70 % en poids et, de manière encore plus préférée, 10 à 60 % en poids
C₄(AₓF₍₁₋ₓ₎)₃$ 0 à 30 % en poids,
de préférence 3 à 25 % en poids et, de manière encore plus préférée, 5 à 20 % en poids
C₂(A_{y}F_{(1-y)}) 0 à 30 % en poids,
de préférence 5 à 20 % en poids et, de manière encore plus préférée, 8 à 15 % en poids
des aluminates réactifs 0 à 20 % en poids,
de préférence 1 à 15 % en poids et, de manière encore plus préférée, 3 à 10 % en poids
de la périclase (M) 0 à 25 % en poids,
de préférence 1 à 15 % en poids et, de manière encore plus préférée, 2 à 10 % en poids
des phases secondaires 0 à 30 % en poids,
de préférence 3 à 20 % en poids et, de manière encore plus préférée, 5 à 10 % en poids,
la somme des proportions étant égale à 100 %.

12. Utilisation d'un liant selon l'une des revendications 1 à 11, en association avec des granulats, pour fabriquer du béton, du mortier ou du crépi, le rapport eau/liant étant ajusté à une valeur comprise entre 0,2 et 2.

13. Utilisation d'un liant selon l'une des revendications 1 à 11 pour immobiliser des polluants, ou en tant que masse pour parois d'étanchéité, en y ajoutant préférentiellement des additifs à action adsorbante tels que les zéolithes et/ou les résines d'échangeur d'ions.

14. Utilisation de la ternésite en tant qu'additif pour activer des matériaux à caractère hydraulique latent et/ou pouzzolanique, **caractérisée en ce que** l'on mélange la ternésite avec lesdits matériaux à caractère hydraulique latent et/ou pouzzolanique et procède au broyage des deux ensemble, en y ajoutant éventuellement d'autres constituants, pour obtenir du ciment ou l'on mélange la ternésite broyée avec lesdits matériaux à caractère hydraulique latent et/ou pouzzolanique broyés, en y ajoutant éventuellement d'autres constituants, pour obtenir ledit liant.

15. Utilisation selon la revendication 14, **caractérisée en ce que**, par rapport audit liant dans son intégralité, la teneur en ternésite est comprise entre 5 et 95 % en poids, de préférence entre 15 et 70 % en poids, notamment entre 20 et 60 % en poids, et la teneur en matériau à caractère hydraulique latent et/ou pouzzolanique est comprise entre 95 et 5 % en poids, de préférence entre 30 et 85 % en poids notamment entre 80 et 40 % en poids, la somme des proportions étant, avec celles des autres constituants du liant, égale à 100 %.

16. Utilisation selon les revendications 14 ou 15, **caractérisée en ce que** l'on utilise au moins un hydroxyde alcalin et/ou alcalino-terreux en tant qu'activant supplémentaire.

17. Utilisation selon l'une des revendications 14 à 16, **caractérisée en ce que** la teneur en matériau hydraulique, s'agissant préférentiellement de ciment de Portland, est comprise entre 1 à 70 % en poids, celle en ternésite est comprise entre 5 et 90 % en poids et celle du matériau à caractère hydraulique latent et/ou pouzzolanique est comprise entre 9 et 94 % en poids, la somme des proportions étant, avec celles des autres constituants du liant, égale à 100 %.

18. Procédé d'activation d'un matériau à caractère hydraulique latent et/ou pouzzolanique au sein de liants hydrauliques, **caractérisé en ce que** l'on ajoute de la ternésite.

19. Procédé selon la revendication 18, **caractérisé en ce que** l'ajout de ternésite représente, par rapport audit liant dans son intégralité, 5 à 95 % en poids, de préférence 15 à 70 % en poids, notamment 20 à 60 % en poids.

20. Procédé selon la revendication 18, **caractérisé en ce que** l'on mélange la ternésite avec les matériaux à caractère hydraulique latent et/ou pouzzolanique et procède au broyage des deux ensemble, en y ajoutant éventuellement d'autres constituant, pour obtenir du ciment ou l'on mélange la ternésite broyée avec lesdits matériaux à caractère hydraulique latent et/ou pouzzolanique broyés, en y ajoutant éventuellement d'autres constituants, pour obtenir ledit liant.
